# EUROPEAN PATENT SPECIFICATION

(11) **EP 3 890 360 B1**
(45) Date of publication and mention of the grant of the patent: **30.04.2025**
(21) Application number: 20192410.7
(22) Date of filing: 24.08.2020
(51) Int. Cl.: H04S 7/00

(54) **AUDIO FIELD ADJUSTING METHOD AND APPARATUS, AND STORAGE MEDIUM**
VERFAHREN UND VORRICHTUNG ZUR EINSTELLUNG EINES AUDIOFELDES UND SPEICHERMEDIUM
PROCÉDÉ ET APPAREIL DE RÉGLAGE DE CHAMP AUDIO ET SUPPORT D'INFORMATIONS

(30) Priority: 31.03.2020 CN 202010241508
(43) Date of publication of application: 06.10.2021
(73) Proprietor: Beijing Xiaomi Mobile Software Co., Ltd., Beijing 100085 (CN)
(72) Inventor: LI, Zheng, Beijing, Beijing 100085 (CN); WANG, Yanjiong, Beijing, Beijing 100085 (CN)
(74) Representative: dompatent von Kreisler Selting Werner - Partnerschaft von Patent- und Rechtsanwälten mbB

(56) References cited:
- KR-A- 20080 079 428
- KR-B1- 101 724 718
- US-B2- 8 472 632

## Description

### TECHNICAL FIELD

The present disclosure relates to a field of artificial intelligence technologies, and more particularly, to an audio field adjusting method, an audio field adjusting apparatus and a storage medium.

### BACKGROUND

With continuous improvement of living standards, more users choose a stereo system to enhance audio effects. Currently, an audio field center position of the stereo system may be determined according to locations of sound boxes in the stereo system. When the user is located in the audio field center position, on-the-spot experience of the user is better. Thus, the audio field center position is the position of optimized audio reception by the user at this position, wherein it is desirable to adjust the audio field center position to the actual user position upon movement of the user.

In actual scenes, movement of the user in the space where the stereo system is placed requires the user to manually adjust the stereo system to maintain good audio effect, for the purpose of improving the audio effect.

Manually adjusting audio field settings of the stereo system is cumbersome and requires professional adjustment of the audio field settings of the stereo system, otherwise the audio field effect required by the user cannot be achieved.

KR20120079749 and US8472632 disclose an audio system, including a plurality of speakers, a plurality of receivers and an audio processing part. The audio processing part calculates the location of the tag apparatus by analyzing the electric waves received from the receivers.

### SUMMARY

The invention is set out in the appended set of claims. In order to overcome existing problems in the related art, embodiments of the present disclosure provide an audio field adjusting method, an audio field adjusting apparatus and a storage medium.

In a first aspect, the embodiments of the present disclosure provide an audio field adjusting method as defined in claim 1.

Preferably, after determining the audio field center position, the method further includes: obtaining the user position fed back by the UWB module in each of the plurality of the sound boxes again, re-determining the audio field center position according to the user position; and according to the re-determined audio field center position, the audio field position of each of the plurality of the sound boxes, so that the adjusted audio field position of the stereo system is the re-determined audio field center position.

Preferably, the number of the sound boxes is greater than or equal to 3.

Embodiments of the present disclosure provide an audio field adjusting apparatus as defined in claim 4.

Preferably, the determining unit is further configured to re-determine the audio field center position according to the user positions re-fed back by the UWB modules in each of the plurality of the sound boxes. The adjusting unit is further configured to: according to the re-determined audio field center position, adjust the audio field position of each of the plurality of the sound boxes, so that the adjusted audio field position of the stereo system is the re-determined audio field center position.

Preferably, the number of the sound boxes is greater than or equal to 3.

Embodiments of the present disclosure provide a non-transitory computer-readable storage medium, the non-transitory computer-readable storage medium stores computer-executable instructions, when the computer-executable instructions are executed by a processor, the audio field adjusting method according to the embodiments of the first aspect or any of the embodiments of the first aspect is implemented.

Embodiments of the present disclosure provide a stereo system implementing the audio field adjusting method in the first aspect of the present disclosure. Therein, the UWB module in the mobile terminal carried by the user is configured to provide the user position to the UWB module in each of the plurality of the sound boxes.

Preferably, each of the plurality of the sound boxes is configured to interact with the UWB module in the mobile terminal , to obtain a position relationship between the UWB module in each of the plurality of the sound boxes and the UWB module in the mobile terminal.

The technical solutions according to the embodiments of the present disclosure may include the following beneficial effects. The stereo system determines the audio field center position according to the user position fed back by the UWB module in each of the plurality of the sound boxes, and adjusts an audio field position of each of the plurality of the sound boxes according to the audio field center position, so that an audio field position of the stereo system is the audio field center position. In the present disclosure, the audio field center position is accurately adjusted according to the location of the user, and the audio field effect of the stereo system is improved.

It is understood that the above general description and the following detailed description are only exemplary and explanatory, and do not limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flowchart of an audio field adjusting method according to an exemplary embodiment.
FIG. 2 is an exemplary diagram of an audio field adjusting method according to an exemplary embodiment.
FIG. 3 is a flowchart of an audio field adjusting method according to an exemplary embodiment.
FIG. 4 is a block diagram of an audio field adjusting apparatus according to an exemplary embodiment.
FIG. 5 is a block diagram of an audio field adjusting apparatus according to an exemplary embodiment.
FIG. 6 is a block diagram of a device according to an exemplary embodiment.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following exemplary embodiments do not represent all implementations in accordance with the subject disclosure. Rather, they are mere examples of the apparatus (i.e., device) and method in accordance with certain aspects of the subject disclosure as recited in the accompanying claims. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the subject disclosure. Rather, they are merely examples of the apparatus and method in accordance with certain aspects herein as recited in the accompanying claims.

A term used in some embodiments herein is merely for describing the embodiment instead of limiting the subject disclosure. A singular form "a" and "the" used in some embodiments herein and the appended claims may also be intended to include a plural form, unless clearly indicated otherwise by context. Further note that a term "and / or" used herein may refer to and contain any combination or all possible combinations of one or more associated listed items.

Note that although a term such as first, second, third may be adopted in some embodiments herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if" as used herein may be interpreted as "when" or "while" or "in response to determining that."

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc., may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and/or processor devices and/or microcontroller devices.

In addition, a term such as "first," "second," etc., may serve but for description purposes and should not be construed as indication or implication of relevancy, or implication of a quantity of technical features under consideration. Accordingly, a feature with an attributive "first," "second," etc., may expressly or implicitly include at least one such feature. Herein by "multiple", it may mean two or more unless indicated otherwise expressly.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

Exemplary embodiments are described in detail here, examples of which are shown in the drawings. When referring to the drawings below, unless otherwise indicated, the same numerals in different drawings represent the same or similar elements. The embodiments described in the following exemplary embodiments do not represent all embodiments consistent with the present disclosure. Rather, they are merely examples of devices and methods consistent with some aspects of the present disclosure as detailed in the appended claims.

Ultra Wide Band (UWB) technologies refer to carrier-free communication technologies adopting nanosecond-level non-sinusoidal wave narrow pulse transmission technologies, which have characteristics such as high transmission rate, strong anti-interference ability, cost-efficient and low power consumption, and is widely applied in sort-range high-speed data transmission scenarios.

In some scenarios, movements of the user in the space where the stereo system is placed may require the user to manually adjust the stereo system to maintain good audio effects.

Manually adjusting audio field settings of the stereo system can be inconvenient and require professional adjustment of the audio field settings of the stereo system, otherwise the audio field effect required by the user cannot be achieved.

The exemplary embodiments of the present disclosure are applicable for an application scenario in which the audio field position of a stereo system is adjusted. In this scenario, the stereo system may be, for example, a home theater stereo system including an audio controller and a plurality of sound boxes, and the home theater stereo system supports the function of dynamically adjusting the position of the audio field.

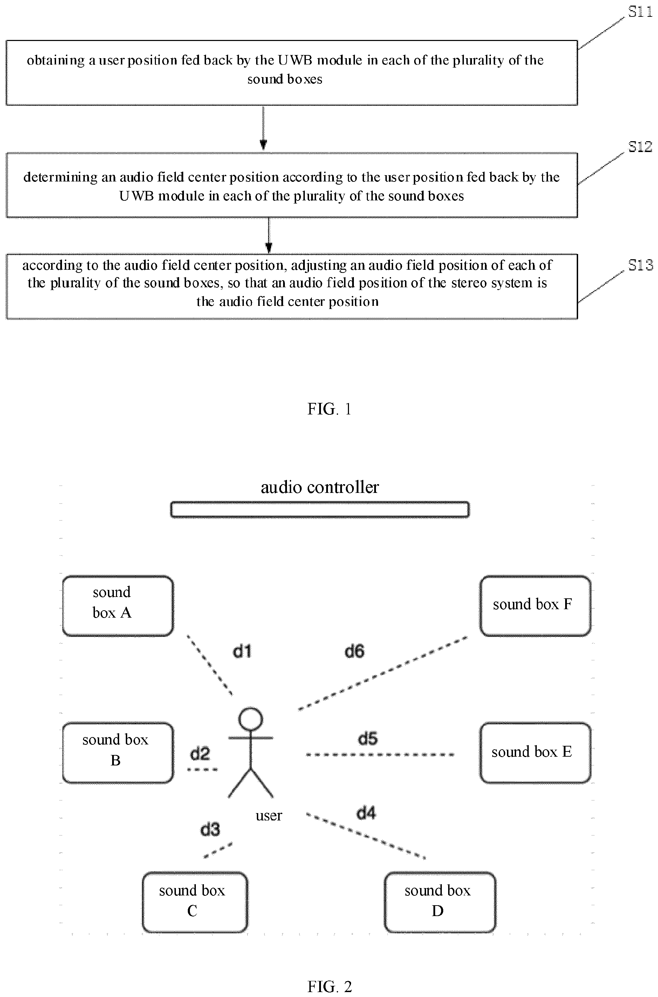

FIG. 1 is a flowchart of an audio field adjusting method according to an exemplary embodiment. As illustrated in FIG. 1, the audio field adjusting method is applicable for a stereo system, and the method includes the following steps.

At step S11, a user position fed back by the UWB module in each of the plurality of the sound boxes is obtained.

In the present disclosure, the audio controller in the stereo system is configured to obtain the user position fed back by the UWB module in each of the plurality of the sound boxes.

Each of the plurality of the sound boxes includes an Ultra-Wide Band (UWB) module, and the user carries a device comprising an UWB module. For example, the UWB module carried by the user may be a mobile terminal such as a smartphone installed with the UWB module, or a UWB positioning device. Each of the plurality of the sound boxes interacts with the UWB module carried by the user through the installed UWB module, to obtain a position relation between a user and the UWB module in each of the plurality of the sound boxes through the UWB module, and the position relationship with the user is send to the audio controller of the stereo system.

When determining the audio field center position, the audio controller of the stereo system needs to perform plane modeling on the plane where the stereo system is located according to the area of the space where the stereo system is located and the initial positions of the sound boxes, in which the plane where the stereo system is located is converted into a plane grid, the sound boxes are used as nodes of the grid, and connections of adjacent sound boxes are used as edges of the grid, thus a grid-like plane is generated. The plane grid of the space where each sound box is placed in the grid-like plane is initially configured. Therefore, in order to accurately locate the model plane, the audio controller of the stereo system requires the number of the sound boxes to be greater than or equal to 3.

At step S12, an audio field center position is determined according to the user position fed back by the UWB module in each of the plurality of the sound boxes.

In the present disclosure, the audio controller calculates the current location of the user based on the user position fed back by the UWB module in each of the plurality of the sound boxes and the initial location of each sound box configured in the audio controller, and determines the current location of the user as the audio field center position.

At step S13, according to the audio field center position, an audio field position of each of the plurality of the sound boxes is adjusted, so that an audio field position of the stereo system is the audio field center position.

In the present disclosure, when the user is moving, the UWB modules installed in the sound boxes and the UWB module-mounted device carried by the user interact in real time to obtain the user position, so that the user position is accurate. The sound boxes feedback the user position to the stereo system, and then the stereo system obtains the accurate user position feedback by the sound boxes. Based on the user position, the stereo system determines the audio field center position, and obtains the accurate audio field center position. Based on the accurate audio field center position, by adjusting the setting parameters of an equalizer, the audio controller in the stereo system may adjust the audio field position of each sound box to obtain the audio field center position of the stereo system.

FIG. 2 is an exemplary diagram of an audio field adjusting method according to an exemplary embodiment. As illustrated in FIG. 2, the stereo system includes an audio controller and 6 sound boxes including sound box A-sound box F, and each sound box includes an Ultra-Wide Band (UWB) module.

The audio controller of the stereo system performs plane modeling on the plane of the space where the stereo system is located according to the area of the space where the stereo system is located and the initial positions of the sound boxes, that is, the plane of the space where the stereo system is located is converted into a grid. For example, the space where the stereo system is located is converted by grid side length of 0.2 meters to generate a grid-like plane. The plane grid of the space where the stereo system is located is initially configured. Sound box A to sound box F obtain the position relations d1 to d6 with the user through the installed UWB module, and sends the positional relations with the user to the audio controller. The audio controller determines the current user position according to the user positions fed back by the UWB modules in the six sound boxes and the initial grid position of the sound boxes, that is, the grid position of the plane where the current user is placed in the space. The grid position where the user is currently located is determined as the audio field center position. According to the audio field center position, the audio controller adjusts the setting parameters of the equalizer to adjust the audio field position of each sound box, so that the audio field position of the stereo system is the audio field center position.

In an exemplary embodiment of the present disclosure, the stereo system determines the audio field center position according to the user positions fed back by the UWB modules in each sound box, and according to the audio field center position, adjusts the audio field position of each sound box so that the audio field of the stereo system becomes the audio field center position. In the present disclosure, the audio field center position is dynamically and accurately adjusted according to the user position, and the audio field effect of the sound box is improved.

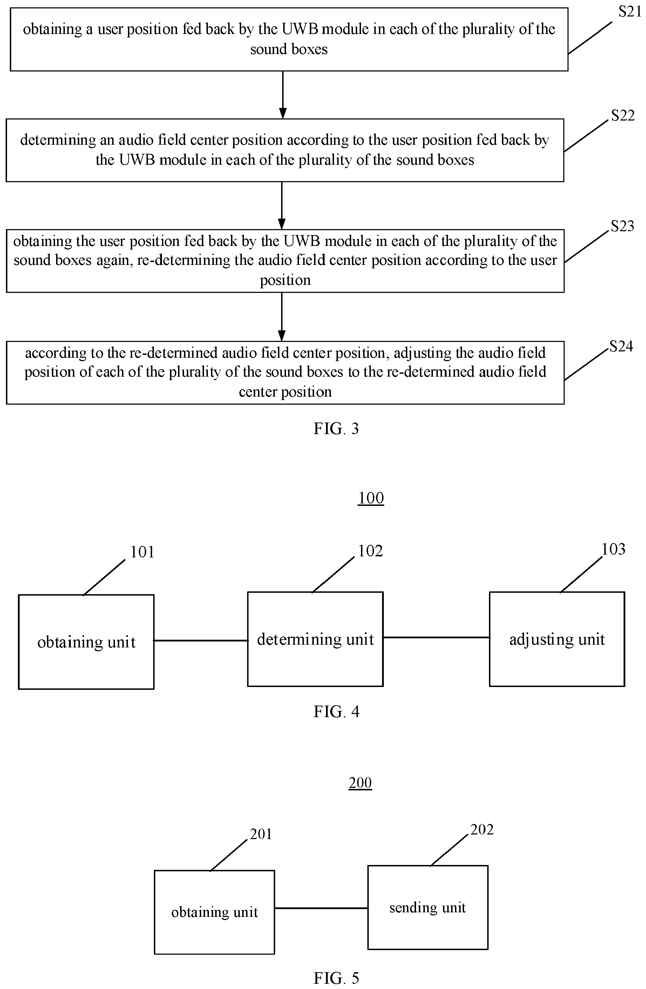

FIG. 3 is a flowchart of an audio field adjusting method according to an exemplary embodiment. As illustrated in FIG. 3, the audio field adjusting method applicable for a stereo system includes the following steps.

At step S21, a user position fed back by the UWB module in each of the plurality of the sound boxes is obtained.

At step S22, an audio field center position is determined according to the user position fed back by the UWB module in each of the plurality of the sound boxes.

At step S23, according to the user position re-fed back by the UWB module in each of the plurality of the sound boxes, the audio field center position is re-determined.

In the actual scene, the user moves frequently in the space where the stereo system is placed. In order to ensure good sound experience of the user, the stereo system needs to be dynamically re-determine the audio field center position according to the user position fed back by the UWB module in each of the plurality of the sound boxes. Furthermore, according to the newly determined audio field center position, the audio field position of each sound box is readjusted by adjusting the setting parameters of the equalizer, so that the adjusted audio field position of the stereo system is the newly determined audio field center position.

At step S24, according to the re-determined audio field center position, the audio field position of each of the plurality of the sound boxes is adjusted, so that the adjusted audio field position of the stereo system is the re-determined audio field center position.

In an exemplary embodiment of the present disclosure, the audio field center position is re-determined according to the user position re-feedback by the UWB module in each sound box, and the audio field center position is dynamically adjusted to improve user audio experience of the stereo system. The adjusting can be automatic adjusting dynamically based the user position in real time.

Based on the same inventive concept, the present disclosure also provides an audio field adjusting apparatus.

It is understood that, in order to realize the above-mentioned functions, the apparatus for controlling the intelligent control device (such as an intelligent voice control device) according to the embodiments of the present disclosure includes modules of hardware structure and/or software to implement various function. With reference to the units and algorithm steps of the examples disclosed in the embodiments of the present disclosure, the embodiments of the present disclosure are implemented in the form of hardware or a combination of hardware and computer software. Whether a function is executed by hardware or hardware driven by computer software depends on the specific application and design constraints of the technical solution. Those skilled in the art may use different methods to implement the described functions for each specific application, but such implementation should not be considered to exceed the scope of the technical solutions of the embodiments of the present disclosure.

FIG. 4 is a block diagram of an audio field adjusting apparatus 100 according to an exemplary embodiment. As illustrated in FIG. 4, the audio field adjusting apparatus is applicable for a stereo system, the stereo system contains a plurality of sound boxes, and each of the plurality of sound boxes comprises an Ultra-Wide Band (UWB) module, the apparatus includes: an obtaining unit 101, a determining unit 102, and an adjusting unit 103.

The obtaining unit 101 is configured to obtain a user position fed back by the UWB module in each of the plurality of the sound boxes.

The determining unit 102 is configured to determine an audio field center position according to the user position fed back by the UWB module in each of the plurality of the sound boxes.

The adjusting unit 103 is configured to according to the audio field center position, adjust an audio field position of each of the plurality of the sound boxes, so that an audio field position of the stereo system is the audio field center position.

In an embodiment, the determining unit 102 determines the audio field center position according to the user positions fed back by the UWB modules in each of the plurality of the sound boxes in the following manners: calculating a current user location according to an initial position of each of the plurality of the sound boxes and the user position fed back by the UWB module in each of the plurality of the sound boxes; and determining the current user position as the audio field center position.

In an embodiment, the determining unit 102 is further configured to re-determine the audio field center position according to the user positions re-fed back by the UWB modules in each of the plurality of the sound boxes. The adjusting unit is further configured to: according to the re-determined audio field center position, adjust the audio field position of each of the plurality of the sound boxes, so that the adjusted audio field position of the stereo system is the re-determined audio field center position.

In an embodiment, the number of the sound boxes is greater than or equal to 3.

FIG. 5 is a block diagram of an audio field adjusting apparatus 200 according to an exemplary embodiment. As illustrated in FIG. 5, the audio field adjusting apparatus is applicable for a plurality of sound boxes included in a stereo system, each of the plurality of the sound boxes includes an Ultra Wide Band (UWB) module, and the apparatus includes: an obtaining unit 201 and a sending unit 202.

The obtaining unit 201 is configured to obtain a position relation between a user and the UWB module in each of the plurality of the sound boxes through the UWB module. The sending unit 202 is configured to send the position relation to the stereo system.

Regarding the apparatus in the above embodiment, the specific manner in which each module performs operations has been described in detail in the embodiment related to the method, which is not repeated herein.

In the stereo system implementing the method according to embodiments of the present disclosure, there is a user-associated UWB module configured to provide the user position to the UWB module in each of the plurality of the sound boxes. In an embodiment, the user-associated UWB module is in a mobile terminal of a user. In another embodiment, the mobile terminal of the user is a UWB positioning device. The mobile terminal of the user may be a smartphone installed with the user-associated UWB module.

In an embodiment, each of the plurality of the sound boxes is configured to interact with the user-associated UWB module, to obtain a position relationship between a user and the UWB module in each of the plurality of the sound boxes and the user-associated UWB module.

The stereo system also includes an audio controller configured to obtain and the position relationship. The user position is movable, and the position relationship accordingly is variable. The adjusting is automatic adjusting dynamically based the user position in real time.

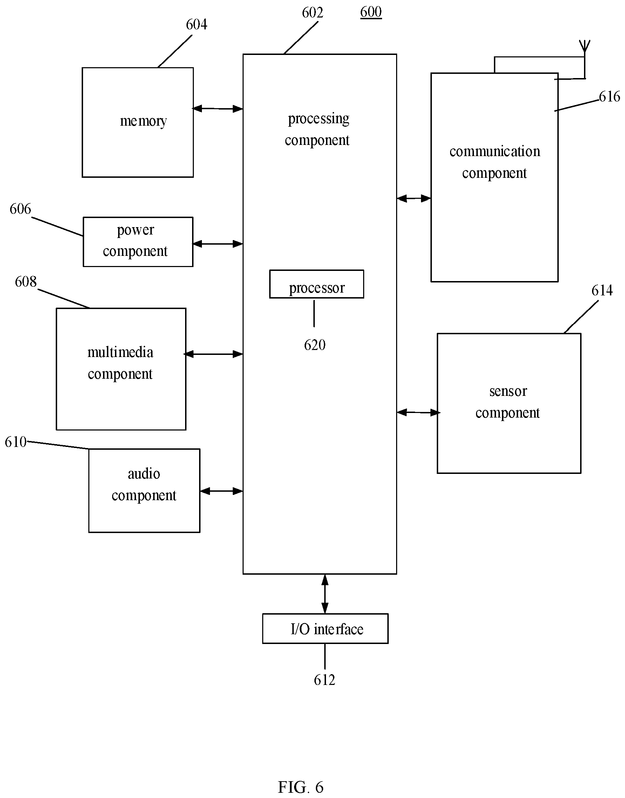

FIG. 6 is a block diagram of an audio field adjusting apparatus 600 according to an exemplary embodiment. For example, the apparatus 600 may be a mobile phone, a computer, a digital broadcasting terminal, a tablet device, a medical device, a fitness device and a personal digital assistant.

As illustrated in FIG. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the apparatus 600. Examples of such data include instructions for any applications or methods operated on the apparatus 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power sources, and any other components associated with the generation, management, and distribution of power in the apparatus 600.

The multimedia component 608 includes a screen providing an output interface between the apparatus 600 and the user. In some embodiments, the screen may include a liquid crystal display (LCD) and a touch panel (TP). In some embodiments, organic light-emitting diode (OLED) or other types of displays can be employed.

If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. When the apparatus 600 is in an operation mode, such as a shooting mode or a video mode, the front camera and/or the rear camera may receive external multimedia data. Each front camera and rear camera can be a fixed optical lens system or have focal length and optical zoom capabilities.

The audio component 610 is configured to output and/or input audio signals. For example, the audio component 610 includes a microphone ("MIC") configured to receive an external audio signal when the apparatus 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the apparatus 600. For instance, the sensor component 614 may detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may further include an acceleration sensor, a gyro sensor, a magnetic sensor, a pressure sensor, or a temperature sensor.

The communication component 616 is configured to facilitate communication, wired or wirelessly, between the apparatus 600 and other devices. The apparatus 600 can access a wireless network based on a communication standard, such as WiFi, 2G, 3G, 4G, 5G, or a combination thereof. In one exemplary embodiment, the communication component 1416 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 804, executable by the processor 820 in the apparatus 800, for performing the above-described methods. For example, the non-transitory computer-readable storage medium may be a ROM, a RAM, a CD-ROM, a magnetic tape, a floppy disc, an optical data storage device, and the like.

The various device components, modules, components, blocks, or portions may have modular configurations, or are composed of discrete components, but nonetheless can be referred to as "modules" in general. In other words, the "components," "modules," "blocks," "portions," or "units" referred to herein may or may not be in modular forms, and these phrases may be interchangeably used.

In the present disclosure, the terms "installed," "connected," "coupled," "fixed" and the like shall be understood broadly, and can be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

In the description of the present disclosure, the terms "one embodiment," "some embodiments," "example," "specific example," or "some examples," and the like can indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

In some embodiments, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program can, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

It should be understood that "a plurality" or "multiple" as referred to herein means two or more. "And/or," describing the association relationship of the associated objects, indicates that there may be three relationships, for example, A and/or B may indicate that there are three cases where A exists separately, A and B exist at the same time, and B exists separately. The character "/" generally indicates that the contextual objects are in an "or" relationship.

In the present disclosure, it is to be understood that the terms "lower," "upper," "under" or "beneath" or "underneath," "above," "front," "back," "left," "right," "top," "bottom," "inner," "outer," "horizontal," "vertical," and other orientation or positional relationships are based on example orientations illustrated in the drawings, and are merely for the convenience of the description of some embodiments, rather than indicating or implying the device or component being constructed and operated in a particular orientation. Therefore, these terms are not to be construed as limiting the scope of the present disclosure.

Moreover, the terms "first" and "second" are used for descriptive purposes only and are not to be construed as indicating or implying a relative importance or implicitly indicating the number of technical features indicated. Thus, elements referred to as "first" and "second" may include one or more of the features either explicitly or implicitly. In the description of the present disclosure, "a plurality" indicates two or more unless specifically defined otherwise.

In the present disclosure, a first element being "on" a second element may indicate direct contact between the first and second elements, without contact, or indirect geometrical relationship through one or more intermediate media or layers, unless otherwise explicitly stated and defined. Similarly, a first element being "under," "underneath" or "beneath" a second element may indicate direct contact between the first and second elements, without contact, or indirect geometrical relationship through one or more intermediate media or layers, unless otherwise explicitly stated and defined. The matter for which protection is sought is uniquely defined by independent claim 1 and independent claim 4.

## Claims

1. An audio field adjusting method, performed by an audio controller in a stereo system, wherein the stereo system comprises a plurality of sound boxes, and each of the plurality of sound boxes comprises an Ultra-Wide Band (UWB) module, the method comprises:
obtaining (S11) a user position fed back by the UWB module in each of the plurality of the sound boxes interacting with an UWB module in a mobile terminal carried by the user;
determining (S12) an audio field center position by plane modeling according to the user position fed back by the UWB module in each of the plurality of the sound boxes; and
according to the audio field center position, adjusting (S13) an audio field position of each of the plurality of the sound boxes, such that an audio field position of the stereo system is the audio field center position,
**characterized in that**
determining the audio field center position by plane modeling according to the user position fed back by the UWB module in each of the plurality of the sound boxes, comprises:
performing plane modeling on a plane where the stereo system is located according to an area of a space where the stereo system is located and initial positions of the sound boxes, wherein the plane where the stereo system is located is converted into a plane grid, the sound boxes are used as nodes of the grid, and connections of adjacent sound boxes are used as edges of the grid, to generate a grid-like plane;
calculating a grid position where the user is currently placed according to an initial grid position of each of the plurality of the sound boxes and the user position fed back by the UWB module in each of the plurality of the sound boxes; and
determining the grid position where the user is currently placed as the audio field center position.

2. The method according to claim 1, wherein after determining the audio field center position, the method further comprises:
obtaining the user position re-fed back by the UWB module in each of the plurality of the sound boxes, re-determining the audio field center position according to the user position; and
according to the re-determined audio field center position, adjusting (S24) the audio field position of each of the plurality of the sound boxes, such that the adjusted audio field position of the stereo system is the re-determined audio field center position.

3. The method according to any of claims 1 to 2, wherein the number of the sound boxes is greater than or equal to 3.

4. An audio field adjusting apparatus (100), applicable for a stereo system, wherein the stereo system contains a plurality of sound boxes, and each of the plurality of sound boxes comprises an Ultra-Wide Band (UWB) module, the apparatus comprises:
an obtaining unit (101), configured to obtain a user position fed back by the UWB module in each of the plurality of the sound boxes interacting with an UWB module in a mobile terminal carried by the user;
a determining unit (102), configured to determine an audio field center position by plane modeling according to the user position fed back by the UWB module in each of the plurality of the sound boxes; and
an adjusting unit (103), configured to according to the audio field center position, adjust an audio field position of each of the plurality of the sound boxes, so that an audio field position of the stereo system is the audio field center position,
wherein the determining unit (102) determines the audio field center position by plane modeling according to the user position fed back by the UWB module in each of the plurality of the sound boxes in following manners:
performing plane modeling on a plane where the stereo system is located according to an area of a space where the stereo system is located and initial positions of the sound boxes, wherein the plane where the stereo system is located is converted into a plane grid, the sound boxes are used as nodes of the grid, and connections of adjacent sound boxes are used as edges of the grid, to generate a grid-like plane;
calculating a current user position according to an initial grid position of each of the plurality of the sound boxes and the user position fed back by the UWB module in each of the plurality of the sound boxes; and
determining the current user position as the audio field center position.

5. The apparatus (100) according to claim 4, wherein the determining unit (102) is further configured to re-determine the audio field center position according to the user positions re-fed back by the UWB modules in each of the plurality of the sound boxes; and
the adjusting unit is further configured to:
according to the re-determined audio field center position, adjust the audio field position of each of the plurality of the sound boxes, such that the adjusted audio field position of the stereo system is the re-determined audio field center position.

6. The apparatus (100) according to any of claims 4 to 5, wherein the number of the sound boxes is greater than or equal to 3.

7. A non-transitory computer-readable storage medium, wherein the non-transitory computer-readable storage medium stores computer-executable instructions, when the computer-executable instructions are executed by a processor, the audio field adjusting method according to any of claims 1 to 3 are implemented.

8. A stereo system implementing the method according to claim 1, wherein the UWB module in the mobile terminal carried by the user is configured to provide the user position to the UWB module in each of the plurality of the sound boxes.

9. The stereo system according to claim 8, wherein each of the plurality of the sound boxes is configured to interact with the UWB module in the mobile terminal, to obtain a position relationship between the UWB module in each of the plurality of the sound boxes and the UWB module in the mobile terminal.

## Patentansprüche

1. Verfahren zur Einstellung eines Audiofeldes, das von einem Audio-Controller in einer Stereoanlage durchgeführt wird, wobei die Stereoanlage eine Vielzahl von Resonanzkörpern aufweist, und wobei jeder der Vielzahl von Resonanzkörpern ein Ultrabreitband-(UWB)-Modul aufweist, wobei das Verfahren umfasst:
Erfassen (S11) einer Benutzerposition, die von dem UWB-Module in jedem der Vielzahl von Resonanzkörpern rückgekoppelt wird, die mit einem UWB-Modul in einem von dem Benutzer getragenen mobilen Endgerät zusammenwirken;
Bestimmen (S12) einer Audiofeld-Mittelposition durch Ebenenmodellierung gemäß der Benutzerposition, die von dem UWB-Module in jedem der Vielzahl von Resonanzkörpern rückgekoppelt wird; und
gemäß der Audiofeld-Mittelposition, Einstellen (S13) einer Audiofeld-Position jedes der Vielzahl von Resonanzkörpern, so dass eine Audiofeld-Position der Stereoanlage die Audiofeld-Mittelposition ist,
**dadurch gekennzeichnet, dass**
das Bestimmen der Audiofeld-Mittelposition durch Ebenenmodellierung gemäß der Benutzerposition, die von dem UWB-Modul in jedem der Vielzahl von Resonanzkörpern rückgekoppelt wird, umfasst:
Durchführen einer Ebenenmodellierung auf einer Ebene, auf der sich die Stereoanlage befindet, gemäß einem Bereich eines Raums, in dem sich die Stereoanlage befindet, und Ausgangspositionen der Resonanzkörper, wobei die Ebene, auf der sich die Stereoanlage befindet, in ein Ebenenraster konvertiert wird, die Resonanzkörper als Knoten des Rasters verwendet werden, und Verbindungen von angrenzenden Resonanzkörpern als Ränder des Rasters verwendet werden, um eine rasterähnliche Ebene zu bilden;
Berechnen einer Rasterposition, in der sich der Benutzer gerade befindet, gemäß einer Ausgangsrasterposition jedes der Vielzahl von Resonanzkörpern und der Benutzerposition, die von dem UWB-Module in jedem der Vielzahl von Resonanzkörpern rückgekoppelt wird; und
Bestimmen der Rasterposition, in der sich der Benutzer gerade befindet, als Audiofeld-Mittelposition.

2. Verfahren nach Anspruch 1, wobei das Verfahren nach dem Bestimmen der Audiofeld-Mittelposition ferner umfasst:
Erfassen der Benutzerposition, die erneut von dem UWB-Modul in jedem der Vielzahl von Resonanzkörpern rückgekoppelt wird, und Neubestimmen der Audiofeld-Mittelposition gemäß der Benutzerposition; und
gemäß der neu bestimmmten Audiofeld-Mittelposition, Einstellen (S24) der Audiofeld-Position jedes der Vielzahl von Resonanzkörpern, so dass die eingestellte Audiofeld-Position der Stereoanlage die neu bestimmte Audiofeld-Mittelposition ist.

3. Verfahren nach einem der Ansprüche 1 bis 2, wobei die Anzahl der Resonanzkörper größer als oder gleich 3 ist.

4. Vorrichtung zur Einstellung eines Audiofeldes (100), die in einer Stereoanlage angewendet werden kann, wobei die Stereoanlage eine Vielzahl von Resonanzkörpern enthält, und wobei jeder der Vielzahl von Resonanzkörpern ein Ultrabreitband-(UWB)-Modul aufweist, wobei die Vorrichtung aufweist:
eine Erfassungseinheit (101), die dazu ausgebildet ist, eine Benutzerposition zu erfassen, die von dem UWB-Modul in jedem der Vielzahl von Resonanzkörpern rückgekoppelt wird, die mit einem UWB-Modul in einem von dem Benutzer getragenen mobilen Endgerät zusammenwirken;
eine Bestimmungseinheit (102), die dazu ausgebildet ist, eine Audiofeld-Mittelposition durch Ebenenmodellierung gemäß der Benutzerposition zu bestimmen, die von dem UWB-Module in jedem der Vielzahl von Resonanzkörpern rückgekoppelt wird; und
eine Einstelleinheit (103), die dazu ausgebildet ist, gemäß der Audiofeld-Mittelposition, eine Audiofeld-Position jedes der Vielzahl von Resonanzkörpern einzustellen, so dass eine Audiofeld-Position der Stereoanlage die Audiofeld-Mittelposition ist,
wobei die Bestimmungseinheit (102) die Audiofeld-Mittelposition durch Ebenenmodellierung gemäß der Benutzerposition, die von dem UWB-Module in jedem der Vielzahl von Resonanzkörpern rückgekoppelt wird, auf folgende Art und Weisen bestimmt:
Durchführen einer Ebenenmodellierung auf einer Ebene, auf der sich die Stereoanlage befindet, gemäß einem Bereich eines Raums, in dem sich die Stereoanlage befindet, und Ausgangspositionen der Resonanzkörper, wobei die Ebene, auf der sich die Stereoanlage befindet, in ein Ebenenraster konvertiert wird, die Resonanzkörper als Knoten des Rasters verwendet werden, und Verbindungen von angrenzenden Resonanzkörpern als Ränder des Rasters verwendet werden, um eine rasterähnliche Ebene zu bilden;
Berechnen einer aktuellen Benutzerposition gemäß einer Ausgangsrasterposition jedes der Vielzahl von Resonanzkörpern und der Benutzerposition, die von dem UWB-Module in jedem der Vielzahl von Resonanzkörpern rückgekoppelt wird; und
Bestimmen der aktuellen Benutzerposition als Audiofeld-Mittelposition

5. Vorrichtung (100) nach Anspruch 4, wobei die Bestimmungseinheit (102) ferner dazu ausgebildet ist, die Audiofeld-Mittelposition gemäß den Benutzerpositionen neu zu bestimmen, die von den UWB-Modulen in jedem der Vielzahl von Resonanzkörpern erneut rückgekoppelt werden; und
die Einstelleinheit ferner für Folgendes ausgebildet ist:
gemäß der neu bestimmten Audiofeld-Mittelposition, Einstellen der Audiofeld-Position jedes der Vielzahl von Resonanzkörpern, so dass die eingestellte Audiofeld-Position der Stereoanlage die neu bestimmte Audiofeld-Mittelposition ist.

6. Vorrichtung (100) nach einem der Ansprüche 4 bis 5, wobei die Anzahl der Stereoanlagen größer als oder gleich 3 ist.

7. Nichtflüchtiges computerlesbares Speichermedium, wobei das nichtflüchtige computerlesbare Speichermedium von einem Computer ausführbare Anweisungen speichert, wobei, wenn die von einem Computer ausführbaren Anweisungen von einem Prozessor ausgeführt werden, das Verfahren zur Einstellung eines Audiofeldes nach einem der Ansprüche 1 bis 3 implementiert wird.

8. Stereoanlage, die das Verfahren nach Anspruch 1 implementiert, wobei das UWB-Modul in dem von dem Benutzer getragenen mobilen Endgerät dazu ausgebildet ist, die Benutzerposition dem UWB-Modul in jedem der Vielzahl von Resonanzkörpern bereitzustellen.

9. Stereoanlage nach Anspruch 8, wobei jeder der Vielzahl von Resonanzkörpern dazu ausgebildet ist, mit dem UWB-Modul in dem mobilen Endgerät zusammenzuwirken, um eine Positionsbeziehung zwischen dem UWB-Modul in jedem der Vielzahl von Resonanzkörpern und dem UWB-Modul in dem mobilen Endgerät zu erfassen.

## Revendications

1. Procédé de réglage de champ audio, réalisé par un dispositif de commande audio dans un système stéréo,
dans lequel le système stéréo comprend une pluralité de lecteurs acoustiques, et chacun de la pluralité de lecteurs acoustiques comprend un module à bande ultra-large (UWB), le procédé comprend :
l'obtention (S11) d'une position d'utilisateur renvoyée par le module UWB dans chacun de la pluralité des lecteurs acoustiques interagissant avec un module UWB dans un terminal mobile porté par l'utilisateur ;
la détermination (S12) d'une position centrale de champ audio par modélisation plane selon la position d'utilisateur renvoyée par le module UWB dans chacun de la pluralité des lecteurs acoustiques ; et
selon la position centrale de champ audio, le réglage (S13) d'une position du champ audio de chacun de la pluralité des lecteurs acoustiques, de telle sorte qu'une position de champ audio du système stéréo est la position centrale de champ audio,
**caractérisé en ce que**
la détermination de la position centrale de champ audio par modélisation plane selon la position d'utilisateur renvoyée par le module UWB dans chacun de la pluralité des lecteurs acoustiques, comprend :
la réalisation d'une modélisation plane sur un plan où se situe le système stéréo selon une zone d'un espace où se situe le système stéréo et des positions initiales des lecteurs acoustiques, dans lequel le plan où se situe le système stéréo est converti en une grille plane, les lecteurs acoustiques sont utilisés en tant que nœuds de la grille et les connexions des lecteurs acoustiques adjacents sont utilisées en tant que bords de la grille, afin de générer un plan de type grille ;
le calcul d'une position de grille où l'utilisateur est actuellement placé selon une position de grille initiale de chacun de la pluralité des lecteurs acoustiques et de la position d'utilisateur renvoyée par le module UWB dans chacun de la pluralité des lecteurs acoustiques ; et
la détermination de la position de grille où l'utilisateur est actuellement placé en tant que position centrale de champ audio.

2. Procédé selon la revendication 1, dans lequel, après la détermination de la position centrale de champ audio, le procédé comprend en outre :
l'obtention de la position d'utilisateur renvoyée par le module UWB dans chacun de la pluralité des lecteurs acoustiques, la redétermination de la position centrale de champ audio selon la position d'utilisateur ; et
selon la position centrale redéterminée du champ audio, le réglage (S24) de la position de champ audio de chacun de la pluralité des lecteurs acoustiques, de telle sorte que la position de champ audio réglée du système stéréo est la position centrale de champ audio redéterminée.

3. Procédé selon l'une quelconque des revendications 1 à 2, dans lequel le nombre de lecteurs acoustiques est supérieur ou égal à 3.

4. Appareil de réglage de champ audio (100), applicable à un système stéréo, dans lequel le système stéréo contient une pluralité de lecteurs acoustiques, et chacun de la pluralité de lecteurs acoustiques comprend un module à bande ultra-large (UWB), l'appareil comprend :
une unité d'obtention (101), configurée pour obtenir une position d'utilisateur renvoyée par le module UWB dans chacun de la pluralité des lecteurs acoustiques interagissant avec un module UWB dans un terminal mobile porté par l'utilisateur ;
une unité de détermination (102), configurée pour déterminer une position centrale de champ audio par modélisation plane selon la position d'utilisateur renvoyée par le module UWB dans chacun de la pluralité des lecteurs acoustiques ; et
une unité de réglage (103), configurée pour régler, selon la position centrale de champ audio, une position de champ audio de chacun de la pluralité des lecteurs acoustiques, de sorte qu'une position de champ audio du système stéréo est la position centrale de champ audio,
dans lequel l'unité de détermination (102) détermine la position centrale de champ audio par modélisation plane selon la position d'utilisateur renvoyée par le module UWB dans chacun de la pluralité des lecteurs acoustiques des manières suivantes :
en réalisant une modélisation plane sur un plan où se situe le système stéréo selon une zone d'un espace où se situe le système stéréo et des positions initiales des lecteurs acoustiques, dans lequel le plan où se situe le système stéréo est converti en une grille plane, les lecteurs acoustiques sont utilisés en tant que nœuds de la grille et les connexions des lecteurs acoustiques adjacents sont utilisées en tant que bords de la grille, afin de générer un plan de type grille ;
en calculant une position d'utilisateur actuelle selon une position de grille initiale de chacun de la pluralité des lecteurs acoustiques et de la position d'utilisateur renvoyée par le module UWB dans chacun de la pluralité des lecteurs acoustiques ; et
en déterminant la position d'utilisateur actuelle en tant que position centrale de champ audio.

5. Appareil (100) selon la revendication 4, dans lequel l'unité de détermination (102) est en outre configurée pour redéterminer la position centrale de champ audio selon les positions d'utilisateur renvoyées par les modules UWB dans chacun de la pluralité des lecteurs acoustiques ; et
l'unité de réglage est en outre configurée pour :
selon la position centrale de champ audio redéterminée, régler la position de champ audio de chacun de la pluralité des lecteurs acoustiques, de telle sorte que la position de champ audio réglée du système stéréo est la position centrale de champ audio redéterminée.

6. Appareil (100) selon l'une quelconque des revendications 4 à 5, dans lequel le nombre de lecteurs acoustiques est supérieur ou égal à 3.

7. Support de stockage non transitoire lisible par ordinateur, dans lequel le support de stockage non transitoire lisible par ordinateur stocke des instructions exécutables par ordinateur, lorsque les instructions exécutables par ordinateur sont exécutées par un processeur, le procédé de réglage de champ audio selon l'une quelconque des revendications 1 à 3 est mis en œuvre.

8. Système stéréo mettant en œuvre le procédé selon la revendication 1, dans lequel le module UWB du terminal mobile porté par l'utilisateur est configuré pour fournir la position d'utilisateur au module UWB dans chacun de la pluralité des lecteurs acoustiques.

9. Système stéréo selon la revendication 8, dans lequel chacun de la pluralité des lecteurs acoustiques est configuré pour interagir avec le module UWB dans le terminal mobile, afin d'obtenir une relation de position entre le module UWB dans chacun de la pluralité des lecteurs acoustiques et le module UWB dans le terminal mobile.
